Europäisches Patentamt

European Patent Office

Office européen des brevets

(19)

(11) EP 1 624 300 A1

(12) EUROPEAN PATENT APPLICATION

(43) Date of publication:
08.02.2006 Bulletin 2006/06

(51) Int Cl.:
$G01N\ 29/02$ (2006.01)   $B01D\ 1/00$ (2006.01)
$G01F\ 1/66$ (2006.01)   $G01P\ 5/00$ (2006.01)

(21) Application number: 04254683.8

(22) Date of filing: 04.08.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(71) Applicant: Flotec UK Limited
Stoke Canon,
Exeter EX5 4RJ (GB)

(72) Inventors:
• Carrington, Andrew
Stoke Canon
Exeter
EX5 4RJ (GB)

• Rydin-Orwin, Philip
Stoke Canon
Exeter
EX5 4RJ (GB)

(74) Representative: Brown, Michael Stanley
Alpha and Omega,
Chine Croft,
East Hill
Ottery St. Mary,
Devon EX11 1PJ (GB)

(54) **Ultrasonic fluid analysis cell with travel time measurement**

(57) Operation of an evaporator having an outlet through which exhaust gases are discharged is controlled by the use of an ultrasonic measurement cell including a transmitter and a receiver. The cell receives the exhaust gases and the design of the measurement cell is such that the time taken by a pulse to travel from the transmitter to the receiver through the exhaust gases is less than the time taken by a pulse to travel from the transmitter to the receiver through the walls or other solid structure of the measurement cell.

Figure 1

END VIEW CROSS SECTION

EP 1 624 300 A1

**Description**

**Field of the invention**

This invention relates to ultrasonic measurement cells in which pulses of ultrasonic energy are propagated through fluids.

**Background to the Invention**

Ultrasonic methods can be used to analyse a gas by measuring the speed of sound within that gas. This is done by measuring the time of flight (commonly called transit time) for the ultrasound to travel from one sensor to another over a fixed distance. By dividing the distance by the measured time one obtains the speed of sound for the gas. For different gases, the speed of sound is different so it is possible to identify gases from the measured speed of sound. It is also possible to calculate the ratios of known gases in a mixture.

In order to do this, a measurement cell is used that includes one piezoelectric transducer that transmits an ultrasonic signal to another transducer through the gas. The piezoelectric transducer generates ultrasonic energy when excited by an electrical signal. Ideally 100% of the energy should emanate from the front of the transducer, but in practice energy is also radiated out to the sides and to the rear of the device. In order to mechanically protect and electrically insulate the piezo-ceramic transducer, it must be contained within a transducer housing. To reduce the spurious energy radiated into the flow cell, absorbing material can be positioned all around the transducer sides and rear face ensuring that almost all of the energy does in fact pass through the front of the transducer, but the transducer still has to be in direct contact with its mechanical surroundings through its front face for the transmission of ultrasound through to the gas. This means that energy is introduced into the solid material of the mechanical assembly. Generally ultrasound will propagate much more readily through a solid material, due to many factors, but primarily because energy transfer is much more efficient through solid structures that have strong chemical bonds, rather than through a gas that obeys the kinetic gas laws.

US Patent Specification No. 5,437,194 discloses one form of ultrasonic measurement cell in which the arrangement is such that the time taken by a pulse to travel from the transmitter to the receiver through the fluid is less than the time taken by a pulse to travel from the transmitter to the receiver through the walls or other solid structure of the measurement cell.

Ultrasonic absorbers can be placed within a measurement cell to reduce the energy that travels around the mechanical housing, as shown in US Patent Specification No. 5,392,635. The best materials for use as ultrasonic absorbers tend to be soft elastomers such as silicone or neoprene rubber but these materials break down in the presence of many solvents and are thus totally incompatible for use in equipment containing such solvents unless they are mechanically protected by other materials. Also, if the measurement cell is for use in vacuum equipment, it will be necessary to rigidly mount the sensors so that they withstand the forces involved in vacuum equipment. Energy will therefore be transferred from the transducer to the mechanical surroundings.

A measure of the ability for a material to transmit sound is given by acoustic impedance (Z in equation 1 below). A solid material has high impedance whereas a rarefied gas has low impedance. This is simply the density of the material multiplied by the acoustic sound propagation velocity., i.e.

$$Z = \rho.c \qquad\qquad \text{Equation 1).}$$

Where $\rho$= density, and c = acoustic velocity.

When materials have similar impedances, a sound wave can easily pass from one material to the next but if they have different impedances, a wave cannot easily travel from one material to the next. This can be expressed mathematically looking at the Reflection Coefficient (R) and Transmission Coefficient (T) in equations 2) and 3) below:-

$$R = (Z2 - Z1) / (Z2 + Z1) \qquad\qquad \text{Equation 2)}$$

$$T = (2.Z2) /(Z2 + Z1) \qquad\qquad \text{Equation 3)}$$

For example, a reflection coefficient value of 0.5 would mean that 50% of the energy is reflected.

In low pressure systems, the gas will have a very low acoustic impedance compared to the acoustic impedance of the transducer. This large mismatch will cause the transmission reception process to suffer from low received amplitudes and high attenuation. An overall insertion loss of 100 dB is not uncommon. This means that, in order to conduct such measurements in this environment, the measurement cell should have several design considerations as described below with reference to the specific embodiments shown in the accompanying drawings.

Centrifugal evaporators spin and heat samples in a near vacuum environment in a vacuum chamber. The chamber is connected to a vacuum pump. Evaporators of this type are well known (see, for example, British Patent Specification No. 2,334,688). At present it is difficult to know accurately when the evaporation process is complete and impossible to differentiate between various solvents in evaporation runs containing more than one solvent.

It is accordingly an object of the present invention to provide the combination of an evaporator and an ultrasonic measurement cell for use in controlling operation of the evaporator.

It is a further object of the present invention to provide an improved method of controlling operation of an evaporator.

## Summary of the Invention

According to a first aspect of the present invention there is provided the combination of an evaporator and an ultrasonic measurement cell including a transmitter and a receiver, the evaporator having an outlet through which exhaust gases are discharged and the measurement cell having a chamber to receive said exhaust gases, with the arrangement such that the time taken by a pulse to travel from the transmitter to the receiver through the exhaust gases is less than the time taken by a pulse to travel from the transmitter to the receiver through the walls or other solid structure of the measurement cell.

According to a second aspect of the present invention there is provided a method of controlling operation of an evaporator having an outlet through which exhaust gases are discharged, said method comprising providing an ultrasonic measurement cell including a transmitter and a receiver, and connecting the measurement cell to the evaporator, the design of the measurement cell being such that the time taken by a pulse to travel from the transmitter to the receiver through the exhaust gases is less than the time taken by a pulse to travel from the transmitter to the receiver through the walls or other solid structure of the measurement cell.

Further preferred features of the invention are set out in the subsidiary claims.

## Brief Description of the Drawings

Figure 1 is an end view of an ultrasonic measurement cell for use in gas analysis,

Figure 2 is a side view of the cell of Figure 1,

Figure 3 is a block diagram of an evaporator system with the ultrasonic measurement cell positioned between an evaporator chamber and a vacuum pump, and

Figure 4 shows two gas analysis cells, one in a gas flow and the other connected to the gas flow but located within a regulated temperature chamber.

## Detailed Description of the Preferred Embodiments

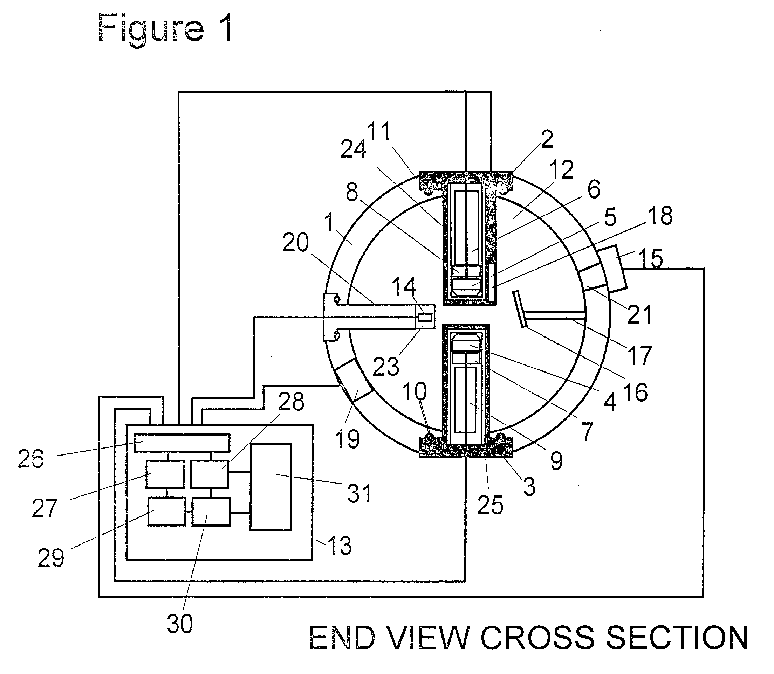

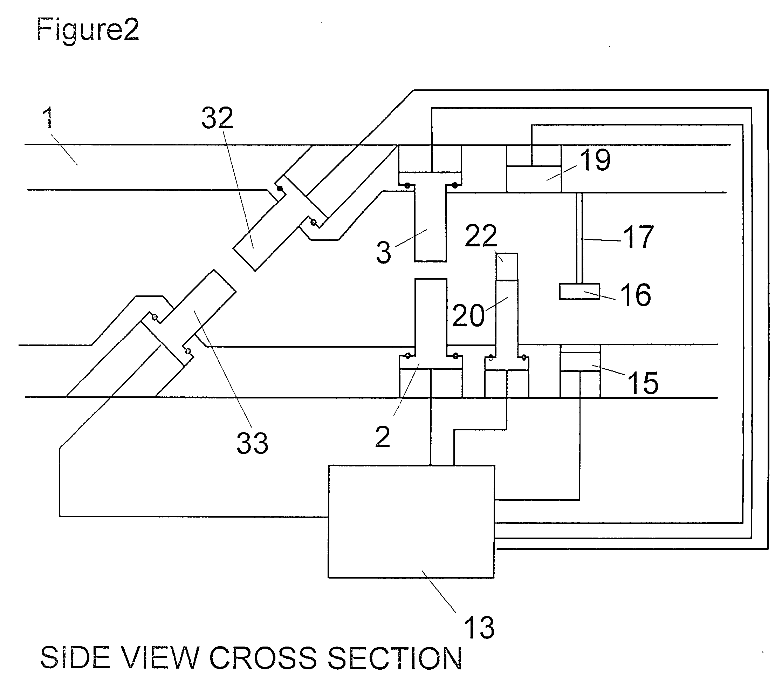

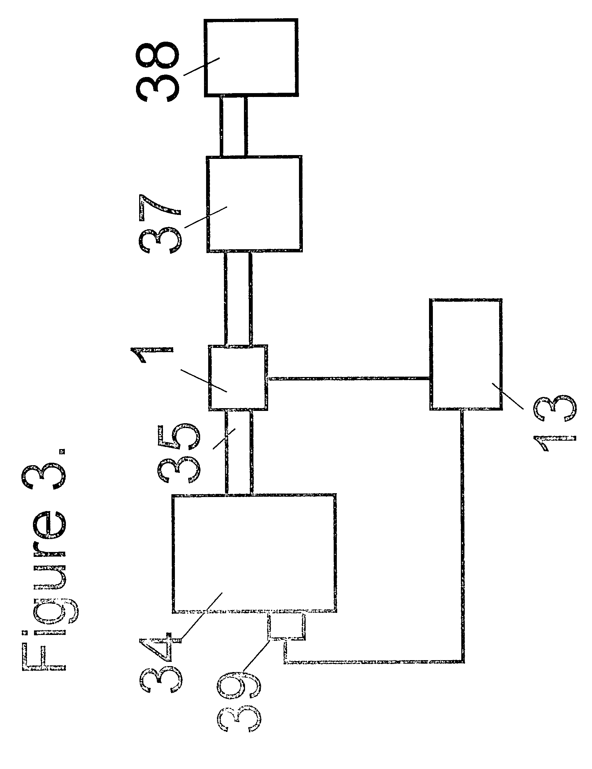

The design and mode of operation of the ultrasonic measurement cell of Figures 1 and 2 will first be described and then its incorporation into the evaporator system, as shown in Figure 3.

As shown in Figures 1 and 2, a low pressure gas 12 flows through a conduit that forms a measurement flow cell 1. Two transducers 4, 5 are situated within this cell in order to accurately characterise the gas. A first piezoelectric transducer 4 is used as a transmitter and a second transducer 5 is used as a receiver. These transducers 4 and 5 are contained within transducer housings 2 and 3. These housings 2, 3 provide a means for positioning the piezoelectric transducers 4, 5 close to each other, towards the centre of the measurement cell. The materials from which the housings 2, 3 and the overall cell 1 are fabricated are selected to have a high acoustic attenuation, low acoustic sound speed and to be mechanically and chemically stable. The thickness of the front of the transducer housing 3 is chosen so as to provide a quarter wave matching layer to improve energy transfer between the transducer 4 and the gas 12. The physical dimensions of the transducer housings 2, 3 and the cell 1 are chosen such that the ultrasonic transit time through them is greater than that through the gas.

Imagine an electrical signal applied to the transmitter 4. In this case, most of the energy moves in a direction towards the receiver 5 but also a small amount of energy is reflected back up the transducer housing 3 around the flow cell 1, through the opposite transducer housing 2 and into the receiving transducer 5. This effect is compounded by the fact that typically ultrasound travels 20 times faster in a solid than in a gas and is attenuated hundreds of times less. Therefore, when a pulsed transmission occurs, the arrangement must be such that the time taken for the ultrasound to travel from the transmitter to receiver via the gas (Tg) is less than the time taken for the ultrasound to travel around the mechanical housing (Tm);

$$Tg < Tm.$$

If this condition is not met, the useful gas-borne ultrasonic transmission will become completely swamped in the energy that travels through the solid material of the flow cell. It will thus be undetectable. In practice due to the detection method, a measurement margin is required, typically;

$$2.Tg <= Tm.$$

Provided that this condition is met, then the time for a pulse of ultrasound to travel from the transmitter to the receiver via the gas can be measured and computed by the measurement cell electronics 13.

The temperature of the gas within the measurement cell has a direct effect on the speed of sound within the gas. It is therefore important that this is accurately determined. However, in near vacuum conditions the rarefied atmosphere causes the heat transfer to be minute. Therefore, any temperature sensor has to be thermally isolated from the surrounding flow cell. A small temperature sensor 14 such as a thermocouple, a miniature platinum resistance detector, or similar, is embedded within a metal block 23. The block material is selected to have a very high thermal conductivity and it is mechanically secured onto the end of a thermally insulating tube 20. The tube 20 has thin electrical connection wires passing through its centre and is back filled with a thermally insulating material. This effectively isolates the temperature sensor 14 from its external surroundings so that it can make an accurate temperature measurement of the gas.

Vacuum seals are incorporated into the design of the insulating tube 20 that is made from a good thermal insulator, such as alumina. This construction offers a good degree of insulation, but an alternative arrangement can be incorporated into the design.

In order to minimize the heat flow through the electrical wires a non-contact temperature sensing method can be used. In this case a pyrometer 15 can be placed on the flow cell 1, and infrared radiation transmitted through an infrared window 21. This infrared radiation would strike a target 16. The target 16 is a thin metal plate having a large surface area to aid heat conduction. The target 16 is secured inside the flow cell, near to the area between the two transducers 4 and 5 by means of a thermally insulating rod 17 constructed from a material having a low thermal conductivity, such as alumina or a machinable glass ceramic. At the target 16, the infrared energy is reflected and received by the pyrometer 15 and the temperature of the target 16 can be determined. Using this technique, an accurate temperature measurement of the gas can be established.

By positioning the gas temperature sensor system used close to the ultrasonic transducer housings 2, 3 it is possible to ensure that the temperature of the gas passing between the two transducers 4, 5 is measured when measuring the speed of sound within this volume of gas.

There is also a pressure transducer 19 included within the flow cell 1. The amount of signal loss within the system is related to both pressure and the actual gas within the measurement cell 1. This pressure transducer 19 accordingly measures one of these factors so that it can be used in the identification of the gas within the cell 1.

A third temperature sensor 18 is placed in one of the transducer housings 2. This is a small sensor such as an RTD or a thermocouple or pyrometer. This sensor 18 measures the temperature of the material in the transducer housing 2. As the ultrasonic signal has to pass through the material forming the housing 2 and into the gas, the speed of sound within the material will have an effect on the transit time of the signal. By measuring the temperature of this material, it is possible to determine the speed within the material at that temperature by using a look-up table. It is thus possible to determine the time the ultrasound spends within the material and correct the transit time measured to give the true transit time through the gas only.

As the ultrasonic signal loss in a near vacuum condition is so large, electronic circuit boards 6 and 9 are located very close to the actual piezoelectric transducers 4 and 5. One circuit is a transmitter 9 and the other is a receiver 6.

The piezoelectric transducers 4 and 5, the absorbing material 7 and 8 and the corresponding electronic circuit boards 6 and 9 are contained within metal cups 24 and 25 that provide a 360 degree electrical screen.

All of the electrical transducer outputs from the temperature, pressure and ultrasonic sensors are connected to the flow cell computer 13. The flow cell computer 13 includes a timer 28, analogue amplifiers 26, signal generator circuitry 27, an analog to digital converter 29, a memory 30 and a digital signal processing unit 31 and any other necessary input / output circuitry to make the cell computer operate.

In operation, the flow cell computer 13 uses its signal generator circuitry to create a timed pulse or series of pulses that are sent to the transmitting transducer 4 via the transmitter board 9. This signal then propagates through the gas within the cell and is received by the receiving transducer 5. It is then pre-amplified by the receiving circuit 6. The amplified received signal is then fed into the cell computer 13 for any further amplification that may be required. This fully amplified signal is then fed into the analog to digital (A/D) converter 29 and digitized with the resulting data being stored in the memory 30. The signal processing unit 31 then uses correlation or similar digital signal processing techniques to determine the overall transit time of the ultrasonic signal.

The cell computer 13 converts the signal obtained from the temperature sensor 18 to a temperature value and then uses this to find the speed of sound within the transducer front face by using a look-up table or through equation. This speed of sound value enables the cell computer 13 to then calculate the time the ultrasound spends within the front faces of both the transmitter transducer 4 and the receiver transducer 5. This time is removed from the overall transit time to obtain the transit time within the gas only. From this the speed of sound within the gas becomes known.

The digitized ultrasonic signal held in the memory 30 can also be used to obtain a signal loss value for the system by using the system gain set by the flow computer 13 and the peak to peak size of the digitized signal.

The cell computer 13 converts the signal from the gas temperature system used, be it a temperature sensor 14 or a pyrometer 15, into a gas temperature value. It also converts the signal from the pressure sensor 19 into a pressure value.

These values of gas sound speed, signal loss, pressure and gas temperature can then all be used to determine the gas or gases present within the measurement cell 1. This can be done by means of look-up tables of the data for different gases or mixtures of gases. The inclusion of more than sound speed and temperature data allows gases with similar sound speeds to be distinguished from each other and for mixtures of gases to be distinguished from single gases.

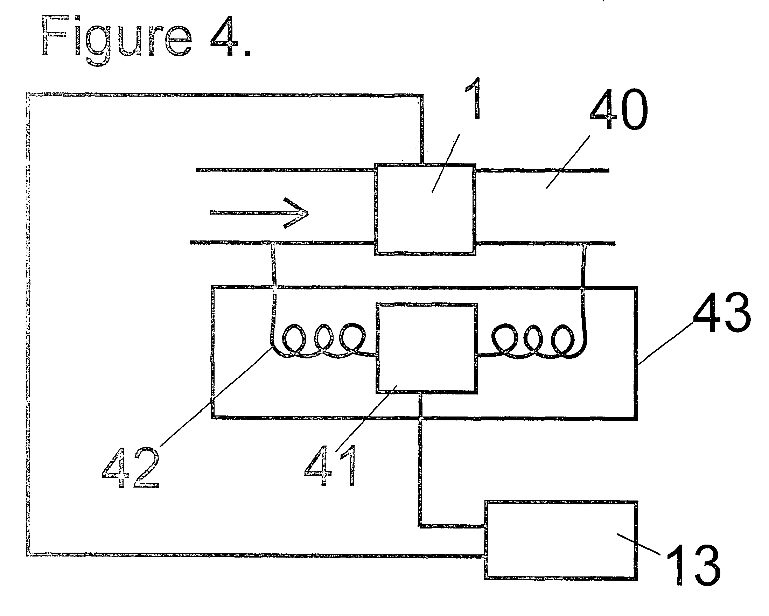

As the speed of sound in a gas is very dependent upon the temperature of the gas, the measurement cell 1 can be contained within a temperature-regulated chamber 43, as shown in Figure 4. In this arrangement gas flows through a pipe 40 containing the measurement cell 1 and a small amount of the gas is diverted and flows through a long capillary tube 42, into the temperature-controlled chamber allowing equilibration of the gas temperature. An identical measurement cell 41 located within the regulated chamber 43 is used to analyse and identify the gas. The sampled gas is then returned to the main flow via a second capillary tube. The outputs from both measurement cells 1 and 41 are sent to the cell computer 13 for processing.

As well as being used to measure the transit time in gas between two sensors perpendicular to the gas flow, as shown in Figure 1, the measurement cell can be extended, as shown in Figure 2. Here, two ultrasonic sensors 32, 33 are positioned at angles to the direction of the gas flow. In this embodiment each sensor 32, 33 is used as a transmitter and a receiver. The transit time is measured going with and against the gas flow direction and the results are averaged to give the gas flow velocity as in ultrasonic gas flowmeters, see for example US Patent Specification No. 5,392,635. This figure can be used with density to obtain volumetric and mass flow within the measurement cell, using flow correction.

As well as measuring the gas flow velocity, these sensors 32, 33 can be used as an alternative arrangement for obtaining the speed of sound in the gas. The transit time with the flow will be determined by the sound speed of the gas speeded up by the flow velocity and the transit time against the flow will be determined by the sound speed slowed down by the flow velocity. So, by averaging the two transit times, one can remove the flow velocity component and just obtain the transit time without the gas flow and hence the speed of sound in the gas.

The measurement cell described above is used to interrogate the exhaust gases by the use of a number of sensors. It is thus possible to identify the actual solvent evaporating, when it starts and stops evaporating, measure the gas flow rate, determine when all the solvent has evaporated and optimize the evaporation process by providing feedback signals to the evaporator and vacuum pump.

The samples are contained within the evaporator 34 shown in Figure 3, and the arrangement is such that the exhaust gases pass through a connecting pipe 35 and through the measurement cell 36 where the physical characteristics of the gas are sensed, and the outputs from the sensors are passed to the cell computer 13 for processing. After the vacuum pump, the solvents are recovered in their liquid phase and collected in a storage vessel 38. This arrangement enables the cell computer 13 to determine the gas flow rate, and identify the gas or gases passing through the pipe 35. This information is then passed to the evaporator control computer 39 so that it can adjust the evaporation process. This can be achieved by adjusting the pressure in the vacuum chamber 34 by controlling the vacuum pump 37, by changing the heat input to the evaporator and by varying the speed of rotation of the samples within the chamber 34. This process optimization will save time and energy, improving system performance and throughput.

When evaporating solvents, it is important to detect the end of the evaporation run in order to prevent the samples from being dried too much. This can be achieved as the measurement cell 1 measures the signal amplitude, which is proportional to the vapour density. Therefore, as the vapour density decreases, so the ultrasonic amplitude decreases thus allowing optimization of the solvent evaporation process. The measurement cell 1, 36 also measures the flow rate. Therefore, as the flow rate approaches zero, an end of evaporation run control signal is generated by the control computer 39 and is fed back to the evaporator to terminate the process.

If a compound is dissolved in a single solvent that is to be evaporated, it is possible to precisely determine the end of run and the rate of evaporation through a new process. Firstly, the user inputs the volume of solvent. The samples are loaded into the evaporator and the process is started. The vacuum pump reduces the pressure in the evaporation chamber 34 and the centrifuge starts to boil the solvent. The flow cell 1 can identify when the solvent starts to evaporate. Initially the flow cell 1 detects the air that is present through use of its sound speed measurements. Once the solvent starts to evaporate, so the measured sound speed changes indicating a change in gas. This results in the sending of a signal to the control computer 39 to start recording the mass flow rate measured through the flow transducers. Alternatively the change in gases within the chamber 34 may also be detected through a change in received signal amplitude, i.e. signal loss, correcting for any pressure changes.

In order to measure the mass flow rate, the flow cell 1 first measures the transit time difference that results in a measurement of fluid velocity. This is multiplied by the cross-sectional area to give a volume flow rate, taking into account the flow profile and applying a correction based on the fluid's Reynolds number. Finally a measure is required of the gas density. This is provided by the amplitude measurement sensors within the measurement cell 1, or by other means. Ultrasonic signal attenuation is proportional to gas density. Multiplying the density by the volume flow rate results in a mass flow rate measurement.

It is thus possible to measure the quantity of solvent that has passed through the measurement cell 1 and hence how much of the original solvent has been removed from the evaporation chamber 34. In this manner, it is possible to estimate how much time remains before the evaporation run is complete. This is a valuable aid to evaporator operators. It is also possible to detect when all the solvent has been evaporated when the measured amount through the measurement cell 1 equals the amount initially placed within the chamber 34.

When the evaporator is used with a number of solvents, the sound speed and signal loss measurements can be used to determine when each individual solvent has started to evaporate. It is also possible to determine the ratios of the resulting gases.

**Claims**

1.  The combination of an evaporator and an ultrasonic measurement cell including a transmitter and a receiver, the evaporator having an outlet through which exhaust gases are discharged and the measurement cell having a chamber to receive said exhaust gases, with the arrangement such that the time taken by a pulse to travel from the transmitter to the receiver through the exhaust gases is less than the time taken by a pulse to travel from the transmitter to the receiver through the walls or other solid structure of the measurement cell.

2.  The combination claimed in Claim 1, in which the measurement cell includes two additional sensors, each of which can act as a transmitter or a receiver, the additional sensors being angled obliquely to the gas flow direction so that they can be used to measure the transit time difference between upstream and downstream ultrasonic transmission pulses to enable the gas flow velocity to be calculated.

3.  The combination claimed in Claim 2, in which means are provided whereby calculations of the gas flow velocity can be used to generate a signal indicating that evaporation has commenced and a signal indicating that evaporation has finished.

4.  The combination claimed in Claim 1, 2 or 3, in which the measurement cell is connected to a computer on which sound speed and other data is stored to permit identification of the gas or gases flowing through the measurement cell.

5.  The combination claimed in Claim 4, which includes means for determining the amount of signal loss through the fluid such that the acoustic attenuation can be calculated to permit identification of the gas or gases flowing through the measurement cell.

6.  The combination claimed in any one of the preceding claims, in which a thermally isolated temperature sensor is contained within the measurement cell.

**7.** A method of controlling operation of an evaporator having an outlet through which exhaust gases are discharged, said method comprising providing an ultrasonic measurement cell including a transmitter and a receiver, and connecting the measurement cell to the evaporator, the design of the measurement cell being such that the time taken by a pulse to travel from the transmitter to the receiver through the exhaust gases is less than the time taken by a pulse to travel from the transmitter to the receiver through the walls or other solid structure of the measurement cell.

**8.** A method as claimed in Claim 7, in which the start and/or the finish of evaporation of a solvent from its liquid state is identified by a change in the speed of sound through the gas flowing through the measurement cell and/or by a change in the amplitude of a received ultrasonic energy pulse.

**9.** A method as claimed in Claim 7 or Claim 8, in which the sensing of a change in the speed of sound through the gas flowing through the measurement cell and/or a change in the amplitude of a received ultrasonic energy pulse creates a control signal that can be used to optimize an evaporation run.

**10.** A method as claimed in any one of Claims 7 to 9, in which identification of the start of evaporation of a solvent from its liquid state initiates operation of a timer and in which identification of completion of evaporation of the solvent sends a signal to the timer to enable the total mass or volume flow rate to be calculated.

# Figure 1

END VIEW CROSS SECTION

EP 1 624 300 A1

Figure2

SIDE VIEW CROSS SECTION

EP 1 624 300 A1

# Figure 3.

Figure 4.

## EUROPEAN SEARCH REPORT

**European Patent Office**

Application Number

EP 04 25 4683

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>Y | EP 1 022 451 A (NGK SPARK PLUG CO) 26 July 2000 (2000-07-26)<br>* abstract; claims 1,15; figures 1,2 *<br>* paragraph [0041] * | 1,3,4,<br>7-10<br>1,2,5-7 | G01N29/02<br>B01D1/000<br>G01F1/66<br>G01P5/00 |
| Y | US 5 437 194 A (LYNNWORTH LAWRENCE C) 1 August 1995 (1995-08-01)<br>* abstract; figures 1,4,10 *<br>* column 1, line 61 - column 2, line 61 *<br>* column 4, line 28 - column 13, line 21 * | 1,7 | |
| Y | US 6 460 402 B1 (KRAFT NANCY C  ET AL) 8 October 2002 (2002-10-08)<br>* abstract; figures 2-4 *<br>* column 8, line 60 - column 9, line 31 * | 2 | |
| Y | US 6 116 080 A (LEE PATRICK S  ET AL) 12 September 2000 (2000-09-12)<br>* abstract; figures 1,7 *<br>* column 20, line 19 - column 23, line 36 *<br>* column 42, line 24 - column 46, line 8 * | 1,5-7 | |
| Y | US 4 424 703 A (MAIR EDUARD  ET AL) 10 January 1984 (1984-01-10)<br>* abstract; figure 7 *<br>* column 2, line 41 - column 3, line 10 *<br>* column 9, line 67 - column 10, line 48 * | 1,7 | TECHNICAL FIELDS SEARCHED (Int.Cl.7)<br>G01N<br>B01D<br>G01F<br>G01P<br>F02D |
| A | GB 2 215 049 A (STC PLC) 13 September 1989 (1989-09-13)<br>* the whole document * | 1,7 | |

The present search report has been drawn up for all claims

| Place of search | Date of completion of the search | Examiner |
|---|---|---|
| Munich | 12 January 2005 | Uttenthaler, E |

**EP 1 624 300 A1**

## ANNEX TO THE EUROPEAN SEARCH REPORT
## ON EUROPEAN PATENT APPLICATION NO.

EP 04 25 4683

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2005

| Patent document cited in search report | | | Publication date | Patent family member(s) | | | Publication date |
|---|---|---|---|---|---|---|---|
| EP 1022451 | A | | 26-07-2000 | JP | 3495935 | B2 | 09-02-2004 |
| | | | | JP | 2000206094 | A | 28-07-2000 |
| | | | | EP | 1022451 | A2 | 26-07-2000 |
| | | | | US | 6568240 | B1 | 27-05-2003 |
| US 5437194 | A | | 01-08-1995 | US | 5515733 | A | 14-05-1996 |
| | | | | US | 5275060 | A | 04-01-1994 |
| | | | | EP | 0746764 | A1 | 11-12-1996 |
| | | | | JP | 9508202 | T | 19-08-1997 |
| | | | | WO | 9519559 | A2 | 20-07-1995 |
| | | | | EP | 0536313 | A1 | 14-04-1993 |
| | | | | JP | 2989264 | B2 | 13-12-1999 |
| | | | | JP | 6501548 | T | 17-02-1994 |
| | | | | WO | 9200507 | A1 | 09-01-1992 |
| US 6460402 | B1 | | 08-10-2002 | US | 2002189367 | A1 | 19-12-2002 |
| | | | | AU | 3482300 | A | 25-08-2000 |
| | | | | WO | 0046583 | A1 | 10-08-2000 |
| US 6116080 | A | | 12-09-2000 | AU | 3566099 | A | 08-11-1999 |
| | | | | WO | 9954709 | A1 | 28-10-1999 |
| | | | | US | 6279379 | B1 | 28-08-2001 |
| | | | | US | 6199423 | B1 | 13-03-2001 |
| | | | | US | 6192739 | B1 | 27-02-2001 |
| US 4424703 | A | | 10-01-1984 | DE | 3112002 | A1 | 14-10-1982 |
| | | | | AT | 11605 | T | 15-02-1985 |
| | | | | EP | 0062104 | A2 | 13-10-1982 |
| | | | | JP | 57169670 | A | 19-10-1982 |
| GB 2215049 | A | | 13-09-1989 | NONE | | | |

EPO FORM P0459

For more details about this annex : see Official Journal of the European Patent Office, No. 12/82

13